# EUROPEAN PATENT SPECIFICATION

(11) **EP 3 840 372 B1**
(45) Date of publication and mention of the grant of the patent: **01.03.2023**
(21) Application number: 19862227.6
(22) Date of filing: 11.09.2019
(51) Int. Cl.: H04N 13/30

(54) **3D IMAGE DISPLAY METHOD AND APPARATUS, AND TERMINAL**
3D-BILDANZEIGEVORRICHTUNG UND -APPARAT, UND TERMINAL
PROCÉDÉ ET APPAREIL D'AFFICHAGE D'IMAGE 3D, ET TERMINAL ASSOCIÉ

(30) Priority: 18.09.2018 CN 201811089350
(43) Date of publication of application: 23.06.2021
(73) Proprietor: Xi'an Zhongxing New Software Co. Ltd., Xi'an, Shaanxi 710119 (CN)
(72) Inventor: SHEN, Shaowu, Xi'an, Shaanxi 710119 (CN)
(74) Representative: Gevers Patents
(86) International application number: PCT/CN2019/105451
(87) International publication number: WO 2020/057420

(56) References cited:
- CN-A- 105 120 251
- CN-A- 107 147 897
- CN-A- 107 172 417
- CN-A- 107 340 269
- US-A1- 2010 123 839
- US-A1- 2012 098 802
- US-A1- 2014 323 153
- JAIME LIEN ET AL: "Soli", ACM TRANSACTIONS ON GRAPHICS, ACM, NY, US, vol. 35, no. 4, 11 July 2016 (2016-07-11), pages 1-19, XP058275791, ISSN: 0730-0301, DOI: 10.1145/2897824.2925953

## Description

### TECHNICAL FIELD

The present disclosure relates to the field of virtual image display, in particular to a 3D image display method and apparatus, and a terminal.

### BACKGROUND

With development of VR and AR technologies, there are more and more usage scenarios for mobile terminals, which are all based on 3D display. Both a naked-eye 3D display and a display with an additional wearable device present synthetic 3D visual effect after different pictures reach the left and right eyes of people. However, there is a common problem at present, that is, a viewing angle of a user may directly affect the 3D imaging effect. If a viewing distance and the viewing angle of the user are not appropriate or if the viewing distance and the viewing angle changes dynamically, not only the visual effect may be greatly reduced, but also dizziness and ghosting may arise in a long run. Therefore, an AR device or a terminal cannot track and switch the display effect according to a change of the angel of the user with respect to the AR device or the terminal, which affects the user's viewing experience.

3D stereoscopic visual experience is an important part of an immersive virtual reality system. How to improve a visual immersion of the user is a big technical problem for the VR at present. A principle of the 3D stereoscopic vision is simulating a visual difference of human eyes and make each eye observe a corresponding picture through certain technical means. There are active (stroboscopic) and passive (polarized) solutions to this problem for a large-scale projection and an LCD screen, but how to make the display content more in line with changes of the user's observation position and eyeball focus position is a problem to be solved by the present application.

For a large-screen mobile phone, a dual-screen mobile phone or a multi-screen mobile phone, generally, an angle for a certain screen that provides the 3D or AR effect is relatively narrow, so the user may obtain a real stereoscopic display effect only when the user is in a certain range of viewing angle. When multiple users view the screen at the same time, a user in the middle may obtain the best 3D effect, while there may be a visual error for users in edges and the users may not obtain the best 3D effect.

Document US 2010/123839 A1 discloses a 3D glasses free 3D display with head tracking and a 3D image adaptation based on the tracked head position and orientation. US 2012/098802 A1 discloses tracking of a plurality of users in front of a 3D glasses free TV based on head position and orientation. J. Lien et al: "Soli: Ubiquitous Gesture Sensing with Millimeter Wave Radar ", published in ACM Transactions on Graphics, vol. 35, no. 4, discloses a millimeter wave sensor for hand gesture recognition small enough to e integrated into a mobile phone.

### SUMMARY

In order to solve the above-described problems, the present disclosure provides a 3D image display method and apparatus, and a terminal, which can improve the viewing experience of users in different directions. The invention is set out in the appended set of claims.

The present disclosure provides a 3D image display method, which includes: obtaining a millimeter wave measurement signal; identifying a user and determining a feature parameter of the user according to the millimeter wave measurement signal and a reference signal; and switching a display parameter of a 3D image according to the feature parameter of the user, wherein, a plurality of the users are included, and identifying a user and determining a feature parameter of the user comprises: determining, for each of the plurality of users respectively, an orientation of the user, a user distance and the user's own feature parameters; and wherein, switching the display parameter of the 3D image according to the feature parameter of the user comprises setting a display parameter of the 3D image applicable to each of the users respectively according to the feature parameter of each of the users, and switching and displaying the display parameter of the 3D image applicable to each of the users in turn.

The present disclosure further provides a 3D terminal image display apparatus which is arranged on the terminal. The apparatus includes: a signal unit configured to obtain a millimeter wave measurement signal; a feature parameter obtaining unit configured to identify a user and determine a feature parameter of the user according to the millimeter wave measurement signal and a reference signal; and an image switching unit configured to switch a display parameter of a 3D image according to the feature parameter of the user.

The present disclosure further provides a terminal, which includes a 3D terminal image display apparatus provided in the present disclosure.

The present disclosure further provides a terminal, including a memory, a processor, and a computer program stored on the memory and executable on the processor. The processor, when executing the computer program, implements processing of any 3D terminal image display method provided in the present disclosure.

The present disclosure further provides a computer-readable storage medium on which a computer program is stored. The computer program, when executed by a processor, implements the processing of any 3D terminal image display method provided in the present disclosure.

### BRIEF DESCRIPTION OF THE DRAWINGS

The accompanying drawings in the embodiments of the present disclosure are described below. The accompanying drawings in the embodiments are used for further understanding of the present disclosure, and are used with the specification to explain the present disclosure. The drawings do not constitute a limitation on the protection scope of the present disclosure.
FIG. 1A and FIG. 1B are schematic flowcharts respectively illustrating a 3D image display method according to an embodiment of the present disclosure.
FIG. 2 is a schematic structural diagram illustrating an apparatus according to an embodiment of the present disclosure.
FIG. 3 is a schematic diagram illustrating a single-user detection according to an illustrative example.
FIG. 4 is a schematic diagram illustrating a multi-user tracking and detection according to an embodiment of the present disclosure.
FIG. 5 is a detection diagram illustrating an antenna for transmitting and receiving millimeter waves according to an embodiment of the present disclosure.
FIG. 6 is a schematic diagram illustrating a human body attenuation detection for a millimeter wave according to an embodiment of the present disclosure.
FIG. 7 is a schematic diagram illustrating obtaining of a feature parameter of a user according to an embodiment of the present disclosure.
FIG. 8 is a diagram illustrating a cooperative detection and an adjustment control according to an embodiment of the present disclosure.
FIG. 9A and FIG. 9B are schematic diagrams illustrating switching of grating according to an embodiment of the present disclosure.
FIG. 10 is a schematic diagram illustrating setting of grating according to an embodiment of the present disclosure.
FIG. 11 is a system structural block diagram illustrating an AR display switching apparatus according to an embodiment of the present disclosure.
FIG. 12 is a schematic flowchart illustrating a 3D image display method according to an embodiment of the present disclosure.

### DETAILED DESCRIPTION

In order to facilitate the understanding of those skilled in the art, the present disclosure is further described below with reference to the accompanying drawings, however, the drawings shall not be interpreted as limitation to the protection scope of the present disclosure. It should be noted that the embodiments in the present disclosure and various ways in the embodiments may be combined with each other to drive other embodiments not explicitly described.

The technical solution provided by the present disclosure includes: obtaining a millimeter wave measurement signal; identifying a user and determining a feature parameter of the user, according to the millimeter wave measurement signal and a reference signal; and switching a display parameter of a 3D image according to the feature parameter of the user. By applying the method of the present application, the feature parameter of the user may be obtained by detecting a signal, so that the position of the user and changes in viewing position are obtained, and the display of the 3D image is switched according to the position of the user and changes in viewing position. Different 3D images are provided to different users, and thus the viewing experience in a multi-user scenario is improved. For a single user, the output of the 3D image is correspondingly controlled by tracking the changes in viewing position, and 3D image viewing experience in mobile scenario is improved for the user.

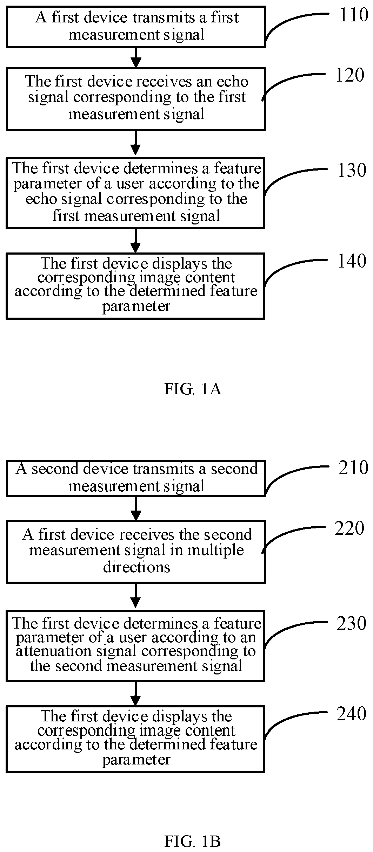

Referring to FIG. 1A, the present disclosure provides a 3D image display method, which includes: at step 110, a first device transmits a first measurement signal, where the first measurement signal is a millimeter wave signal.

A frequency of a millimeter wave is set within a range from 30GHz to 300GHz, and the corresponding wavelength ranges from 1mm to 10mm. Taking a mobile phone WIFI 11AD as an example, 60GHZ signals or 5G signals may be used, and the frequency thereof generally ranges from 20G to 30G. The millimeter wave is able to operate around the clock. Compared with a microwave, the millimeter wave has a relatively short wavelength, a relatively wide frequency band and a good propagation in the atmosphere. The millimeter wave may easily penetrate a shell of the mobile phone without being affected by the structure and shape of the mobile phone. Herein, if a 5G frequency band is selected, it is preferred to select a frequency with small attenuation in propagation and penetration through the atmosphere, such as 35GHZ and 60GHZ, or so. The millimeter wave signal is adjustable, and different detection distances may be set according to the viewing distances of the users. For example, the detection distance may be set to 0-60CM.

At step 120, the first device receives an echo signal corresponding to the first measurement signal. Herein, the first measurement signal is used as a reference signal, the echo signal is used as a millimeter wave measurement signal, and the reference signal and the millimeter wave measurement signal have a high coherence.

The first device transmits and receives the millimeter wave signal in all directions. Since an antenna has a certain angle coverage, a 180-degree detection plane in front of a terminal display screen may be divided into multiple independent visual areas, and the transmission and reception of the millimeter wave signal may be performed in each of the independent visual areas.

The angles of detection antennas and the number of detection antennas may be set to realize the transmission and reception of the millimeter wave signal in all directions. A 180-degree front detection plane may be divided into corresponding areas. For example, if there are 12 antennas and the coverage of each antenna is 15 degrees, the detection plane may be divided into 180/12=15independent visual areas. If there are 24 antennas, and the independent visual area corresponding to each antenna covers an angle of 8 degrees, only 23 antennas has to be used. Herein, the 23 antennas may operate at the same time to perform the reception and transmission of the millimeter wave signals in the respective independent visual areas. Herein, a highly stable continuous millimeter wave signal is first transmitted, then echo signal reflected by each point on a target are received, and the echo signal and a highly coherent reference signal are coherently processed. The first measurement signal may be used as the reference signal.

In addition, scanning of each of the independent visual areas may also be implemented through rotation of the antennas.

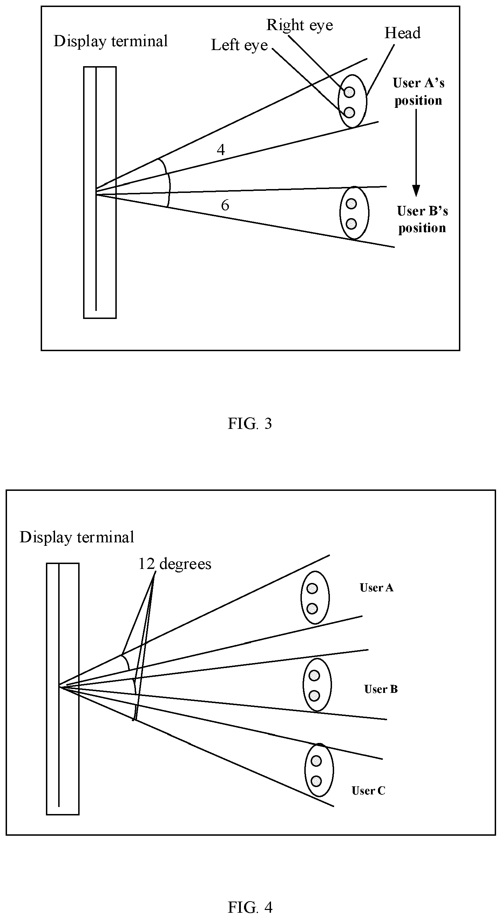

A specific continuous millimeter wave signal is transmitted by a millimeter wave transmitting apparatus placed on the mobile phone to detect whether there is a user within the current 180-degree horizontal range of the mobile phone. Through the above-described angle scanning method, the scanning is performed once every 12 degrees and will be performed 15 times in turn, as shown in the FIG. 4. When signal reflection or attenuation is detected at a certain angle, it is marked that there is a user in a direction corresponding to the angle. For example, there are currently 3 users respectively located within ranges of three angle directions A, B and C, then a scanning terminal may detect a signal change in each of these three directions, thereby marking the existence of users on the entire viewing plane. The scanning of multiple independent visual areas may be implemented in turn, or implemented simultaneously, or the scanning of some independent visual areas may be implemented.

The apparatus transmits the millimeter wave detection signal to a target user through a millimeter wave transmitting antenna by multiplexing a WIFI or 5G millimeter wave chip and a radio frequency front-end system of the mobile phone, and driving antenna arranged in array. An echo signal reflected from the target user is received by a millimeter wave receiving antenna. The echo signal is filtered and amplified by a millimeter wave front-end model, and then after AD sampling, is fed into a millimeter wave baseband processing module and an angle detection module for digital processing.

At step 130, the first device determines a feature parameter of the user according to the echo signal corresponding to the first measurement signal. The feature parameter includes the number of users, an orientation of the user, and a user distance, etc. When multiple users are included, each user may have its own corresponding feature parameter, such as a pupil distance of the user.

The user may be identified according to the millimeter wave measurement signal and the reference signal.

The echo signal reflected by each target point is received and the echo signal and a highly coherent reference signal are coherently processed. The amplitude and phase information of the echo signal of the target user at each point is extracted according to a coherence theory of electromagnetic wave, so as to obtain transmission characteristic at the target point. Finally, the millimeter wave feature information (such as an attenuation parameter, an amplitude parameter, a phase parameter, an image parameter, etc.) of the target user in a scenario may be obtained through a method for processing data and images. Herein, the target point may refer to the target user, that is, the user currently viewing or using the screen of the terminal. The target point may also refer to a boundary point of a user. For example, the boundary points may be set at both sides of the user's body in width direction. The boundary points may also be set at both sides of the user's head.

When the target point refer to a user or users, the number and orientation of the users are obtained by detecting the target point, where a transmitted first measurement signal may be reflected when it reaches the user's body. The signal reflected back to the mobile phone is an echo signal, and different users generate different echo signals. There is a high coherence between an echo signal and the first measurement signal. Therefore, the number and orientation of the users may be obtained by detecting the echo signals, for example, by obtaining the amplitude and phase information of the echo signals through a coherent signal.

After extracting the amplitude and phase information of echo signals, a related filtering processing and algorithm processing are performed, such as a fast Fourier transform, a cylindrical deconvolution, etc. Finally, the echo signal is reconstructed to obtain the feature parameter of the target user.

In an example, the step 130 includes: at step 131, the first device extracts the amplitude and phase information of the echo signal, so as to obtain the transmission characteristic of the target point.

The transmission characteristic herein refers to the feature parameter, such as the amplitude and phase, and existence or absence of the user.

In the embodiment of the present disclosure, time difference values for multiple round trips of the wave are calculated through the echo signal of the millimeter wave. Here, the time difference values for multiple round trips of the wave is obtained by multiple measurements. Since the millimeter wave signal has attenuation and scattering, that is, there may be a certain error in time difference of each measurement, it is necessary to take an average value of multiple measurements. Herein, the time difference values for the multiple round trips in the multiple measurements may be converted into a corresponding total distance value by multiplying a wave speed, and then a vertical distance between the user and the display screen may be calculated by dividing the total distance value by the number of times for the multiple round trips. Besides, since energy attenuations of the millimeter wave signal at different distances are different, the corresponding distance may also be estimated by comparing different attenuation values with a model for mapping relationship between distances and attenuation values. The distance between the user and the display may be calculated by at least one or both of the above means. Herein, the model for mapping relationship between distances and attenuation values indicates a corresponding relationship between the millimeter wave attenuation and propagation distances.

Herein, the feature parameter further includes a pupil distance. The pupil distances of different persons are different, such as the pupil distance for women ranges from 56 to 64mm, the pupil distance for men ranges from 60 to 70mm and the pupil distance for children ranges from 50 to 55mm. Thus, an image presented at a reasonable view of angle matching the human eye position may be customized and generated in real time, according to the eye position and pupil distance of the user, and thus a better 3D visual effect may be provided.

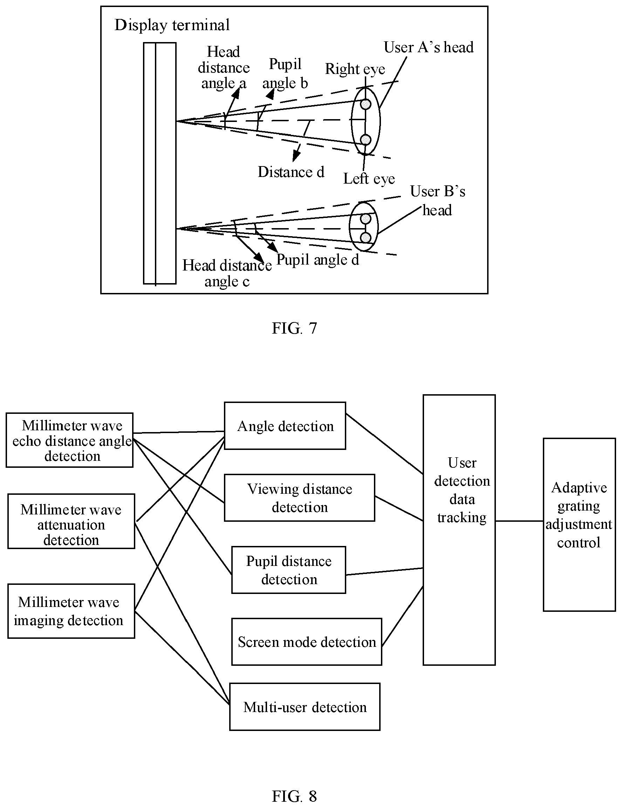

As shown in FIG. 7, through detecting the human body by the millimeter wave, a distance d between the user and the screen is calculated first. Then a scanning for head contour is implemented through an array antenna to obtain a corresponding head distance angle *a*(the head distance angle a is defined as follows: first obtaining a center point between two sides of the head in width direction, then making a vertical line (i.e. the middle dash line of the three dash lines for a user's head as shown in FIG.7 )from the center point to the display screen to obtain an intersecting point of the vertical line and the screen, obtaining two points of the same horizontal level at the two sides of the head in width direction as well as two lines (i.e. the upper and lower dash lines of the three dash lines for a user's head as shown in FIG.7) each formed of one of the two points and the intersecting point, and defining the head distance angle a as an angle between the two lines), and then a width w of the head may be calculated. Next, the user's head image is captured through the front camera, and the distances between the two eyes, i.e., the specific pupil distance of the user, is calculated through the image proportional relationship between the head and the two eyes as well as the obtained width *w* of the head. Finally, according to the vertical distance *d* between the user and the screen and the pupil distance *s*, a corresponding best viewing angle *b* may be calculated, thus realizing tracking for the distance between the target user and the screen and tracking for a pupil distance and angle of the target user.

At step 140, the first device switches a display parameter of the 3D image according to the determined feature parameter.

The display parameters of the 3D image includes a light-emitting angle of the terminal, a view angle of the display, a best viewing distance, a refresh frequency, a picture size, a resolution, a frequency sweep mode and a grating interval.

Herein, the switching of a display parameter may be implemented by adjusting a width, a position, a direction, a shape, number of groups, a grid distance and a tilt angle, a refresh rate and sequence, a horizontal/vertical arrangement, and a refresh frequency of a grating, and other driving parameters. Herein, the adjustment of the shape refers to adjustment between different forms of gratings, such as a slit or cylinder lens grating; or a switching between gratings of specific shapes, such as square, circle, rectangle, oval and other different shapes.

For example, when it is detected that the pupil distance of a user changes, a 3D display view angle is adjusted according to the pupil distances of different users. At the same time, according to different pupil distances, an interval of the corresponding grating is adjusted, so that the user may obtain an interval parameter matching thereto.

Herein, when the number of users increases or decreases, grating grouping sequences for scanning is increased or decreased correspondingly. For example, if there are three users currently, only two sets of grating sequences are required, and if there are four users currently, four sets of grating sequences may be required. The change of the number of the users is adapted by adjusting the number of groups of the grating.

When an orientation of a user changes, an orientation of a scanning angle of the grating changes accordingly, and the direction of the grating is adjusted.

When a pupil distance of a user changes, a best angle changes adaptively, and the width and distance of the grating are adjusted.

When a viewing angle of a user changes, the position and direction of the grating are adjusted.

When a shape of a picture the user's viewing changes, the shape of the grating is adjusted.

When a resolution of a picture the user's viewing changes, the refresh frequency of the grating is adjusted.

Referring to FIG. 1B, the present disclosure provides a 3D image display method, which includes: at step 210, a second device transmits a second measurement signal, and the second measurement signal is a millimeter wave signal; where the second device may be an access point AP, a router, or a millimeter wave 5G base station.

At step 220, a first device receives the second measurement signal in multiple directions, where the signal received in some directions has a relatively large amplitude and may be used as a reference signal, while the signal received in some directions has a relatively small amplitude and become an attenuation signal, which corresponds to a relatively large attenuation.

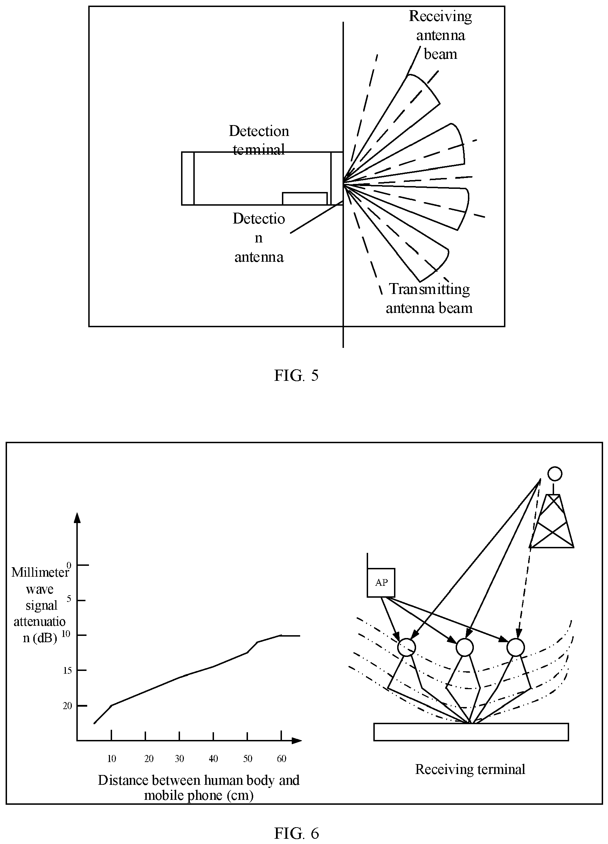

An attenuation characteristic of the user's human body impedance may be tested by a millimeter wave. When there are one or more viewing users in front of a mobile phone, since a target user is in a transmission path from the mobile phone to a millimeter wave base station or a WIFI 11AD router, and the human body absorbs the millimeter wave very strongly, a transmission loss may be very large. For example, as shown in FIG. 6, when the human body is within a certain distance from a transmitting terminal, such as 1-15M, attenuation of the millimeter wave signal is within a certain range, such as 10-20DB. When the human body is farthest from the transmitting terminal but closest to a receiving terminal, an attenuation value is about 17DB at most. Because when the human body is closest to the receiving terminal, most of the paths to the receiving terminal may have the human impedance, so the power of the received signal is the lowest.

When there is a user in a certain angle direction of the first device (such as a display terminal), due to a signal blocking, a multi-path attenuation and other factors, a millimeter wave signal system loss in the corresponding direction may suddenly increase, which is generally above 10DB. By detecting a change of signal strength in the direction, it may be determined whether there is a user in the corresponding direction.

At step 230, the first device determines a feature parameter of the user according to the attenuation signal corresponding to the second measurement signal, including the number of the users, an orientation of the user, and a distance of each user.

The transmitted second measurement signal may be attenuated greatly when passing through the user's body. The mobile phone may perceive the existence of users by receiving these attenuation signals. Different users produce different attenuation signals. There is a high coherence between the attenuation signals and the reference signal. The number and orientations of the users may be known by obtaining the amplitude and phase information of the attenuation signal through a coherent signal.

In addition, the detection ability of the millimeter wave depends on relative positions among a transmitting antenna, a receiving antenna and the target user. The attenuation signal and the reference signal are coherently processed to obtain a maximized attenuation signal.

At step 240, the first device switches a display parameter of the 3D image according to the feature parameter of the user.

The step 130 or step 230 may further include: the first device determines an angle of the user with respect to a center of a display interface according to the received signal.

For a 2D image, the user may see a display picture on the mobile phone clearly when viewing the screen within a range of 160 degrees, and the 2D image may support simultaneous viewing by multiple users. For 3D display content, the user may only acquire the best visual effect when viewing the screen within a specific angle range. If the user's eye or head moves left and right, it is impossible to receive a specific parallax image at the same time, thus the best 3D stereoscopic imaging cannot be obtained, let alone supporting simultaneous viewing by multiple users.

In addition, the user's field of vision for viewing the mobile phone is wide in a horizontal direction and narrow in a vertical direction. The horizontal viewing angle for monocular may be up to 156 degrees, and the horizontal viewing angle for binocular may be up to 188 degrees. The limit for the viewing angle of human eyes is about 150 degrees in the vertical direction and 230 degrees in the horizontal direction. If this viewing angle range is filled with the screen, a feeling of immersion may be provided. Although a size ratio of LCD of the mobile phone ranges from 4:3 to 16:9, and even with a curved screen, due to the limitation of VR display content and the viewing angle, when the user puts on a VR glasses, there is a similar feeling of peeping the world through a keyhole.

When users are viewing the 3D image, the distances between the human eyes of respective persons and the display screen may be different due to different habits of each person. However, a traditional naked-eye 3D video resource is obtained based on a certain viewing angle and distance, so if the distance is relatively close or relatively far, the best stereoscopic viewing effect may not be obtained. If the distance between the user and the display can be detected and a display grating can be adjusted adaptively, the best stereoscopic effect may be obtained regardless of the distance range.

Compared with 3D glasses, naked-eye 3D has a single viewpoint and there may be requirements on position and distance for naked-eye 3D. Due to a binocular parallax, we may have a feeling of depth and a sense of space for the objects we see. The viewpoint in the traditional solution is relatively fixed, and the viewing angle is also fixed, so the user may neither move nor shake for obtaining the 3D effect.

In the embodiment of the present disclosure, a transmission and a reception of the millimeter wave are completed by a millimeter wave antenna array. The millimeter wave antenna array includes several groups of transmitting antennas and receiving antennas. Detection angles of the millimeter wave transmitting and receiving antennas depend on an accuracy and a coverage area of a detection target. The smaller the detection angle, the greater a resolution, but the coverage area may be smaller. If the detection angle is too large, an anti-interference degree may be reduced. Combined with the distance between the user and the mobile phone or a display device (such as 20-50CM) and a best viewing angle of 12 degrees, it may be calculated that the entire field of vision may be covered if there are 15 groups of receiving antenna arrays in the horizontal viewing angle range of 180 degrees, thus realizing a user target tracking and an angle detection. Therefore, the apparatus selects a microstrip array antenna with a beam bandwidth of 12 degrees for the receiving antenna. The microstrip antenna array is composed of multiple microstrip antennas connected in series and in parallel. Each microstrip antenna is divided into three parts: a microstrip patch, a dielectric substrate and a conductor ground layer. As shown in FIG. 4, an excitation phase and amplitude of each array element in the microstrip antenna array are ensured by connecting a feed network of the microstrip antenna array connected in series and in parallel, so that a corresponding beam pattern is formed.

Since the traditional WIFI 11AD or 5G millimeter wave generally has a relatively wide beam width and a low gain, in order to obtain a relatively good angular resolution, it is necessary to design and arrange the combination mode of the microstrip antenna array to eliminate a side-lobe energy and reduce interferences in other directions.

In the embodiment of the present disclosure, a feature user identification may also be obtained through a detection signal. The feature user identification includes a pupil distance, a display grating interval, etc. For users who access for the first time, since the users are different in size, weight and contour, the detected echo signal information of the millimeter wave may be different. Each newly identified user is stored and marked by performing marking again. The stored content includes: a body shape feature of the current user (such as a body width, a head width, and a pupil distance), a reflection coefficient, a penetration loss value, etc. When the target user is detected, the target user is compared with the existing user stored in the original system to determine whether the target user is an old user or a new user, thus forming the feature user identification. All or part of the following parameters may be compared: body shape feature of the current user (such as body width, head width, and pupil distance), reflection coefficient, the penetration loss value, etc. If the target user is an old user, a pre-stored display parameter, including the pupil distance, the display grating interval, etc., may be directly used.

During viewing the screen of the mobile phone, a user may have a left-to-right change in physical position, close to or far from the mobile phone. Furthermore, when the user watches a 3D video or a 3D game through the mobile phone, a position of an eyeball and a head relative to the mobile phone may change slightly, so it is required to adjust parameters such as an eye distance, a focusing range and an observation angle of the picture in real time according to the change of the user.

In addition to a different coherence characteristic of the millimeter wave of each user, a reflection characteristic of the millimeter wave of each user may also be different due to different parameters such as the size, exposed skin and clothes material of each viewing user. Reflectivity of different people varies from 0 to 0.5. By collecting the reflectivity of different users, different viewing users may be identified. For example, a reflectivity of user A is 0.13, a reflectivity of user B is 0.14, a reflectivity of user C is 0.15 and a reflectivity of user D is 0.18, then it may be identified that there are currently 4 different users and each user is tracked, displayed and adjusted.

In addition, the apparatus may detect the position and angle of each viewing user and distinguish the personality characteristics of respective users by using the radiation characteristic of the millimeter waves. According to the blackbody radiation theory, an electromagnetic wave may be radiated when the temperature is higher than an absolute zero. The higher the user's temperature is, the greater the radiation power is, that is, the user's radiation energy is proportional to the user's shell temperature. Since the user's body temperature, the surface temperature of user's clothing and an ambient temperature are different, a millimeter wave detection module of the 3D display terminal receives energy from each radiator, and converts it into a corresponding radiation energy map, and then converts the radiation energy map into a corresponding image. Since the radiation temperatures of respective viewing users are different, that is, the radiation emissivity of the millimeter waves for different users are different. For example, the emissivity of the background of the user's environment is much smaller or even negligible. In particular, the head of the viewing user belongs to a radiation source due to the exposed skin, and the radiation coefficient varies from person to person. When there is a millimeter wave irradiation, the radiation emissivity may be obviously different from person to person. The radiation energies of the user detected at different angles, distances and positions are sampled by a millimeter wave detector of the 3D display terminal, and normalized as a feature parameter, such as a contour curve or image, so that each user may be identified and tracked.

In the embodiment of the present disclosure, displaying the corresponding image content according to the determined feature parameter in step 140 or step 240 could be performed in at least one of the following ways:
i: generating, according to the number of the users, the same number of display sequences correspondingly, and projecting the display sequences through a grating in turn.
ii: when a viewing angle of a user changes, transforming a display sequence corresponding to the user to an updated angle.
iii: changing an interval and width of the grating to match a changed viewing distance when a viewing distance of the user changes.
iv, scanning a range for an angle between a left side and a right side of a human head by a boundary scanning method, determining that the current user turns or shifts his/her head when an angle changes during an intermittent scanning, and activating a display adjustment corresponding to the head turning or shifting.
v, adjusting an interval of a grating corresponding to a user according to a position of the user's head and a pupil distance between two eyes, so that the user acquires a matching interval parameter.

The naked-eye 3D requires the user to obtain the stereoscopic visual effect of the display device through the naked eyes without any auxiliary equipment, which changes the direction of a binocular view on the display screen mainly through an optical equipment, so that the human eyes may see the corresponding stereoscopic images respectively. Since there is not an independent image display channel, it is necessary to use certain optical equipment to realize a parallax barrier. A vertical stripe with a certain rotation direction is generated by the display screen and a polarizing film composed of a light transmission part and a light blocking part. Respective pixels of the left eye image and respective pixels of the right eye image is alternately displayed on a LCD. Pixels of the left eye are projected to the left eye through a gap A, and an image of the right eye is projected to the right eye through a gap B, thus providing the stereoscopic 3D visual effect due to a left and right parallax.

Generally, the eyes and eyeballs of the user are relatively stationary, but in the case of the naked-eye 3D, or when the user's head moves or an AR tracking object moves, the user and the target object may be in a state of relative motion, and there may be a deviation in polarization effect. The grating parameters on the traditional mobile phone are relatively fixed, so the user may only obtain the best 3D effect from a certain angle. If the width, position, direction, shape, refresh frequency, turning on and off of grating lines can be adjusted and set adaptively, according to the current number of the users, position and angle, the pupil distances and movement tracks of heads and eyes, the user may obtain the best stereoscopic effect from multiple angles. Therefore, in the display design, grating parameter display adjustment may be triggered according to the current user feature in a direction corresponding to the direction.

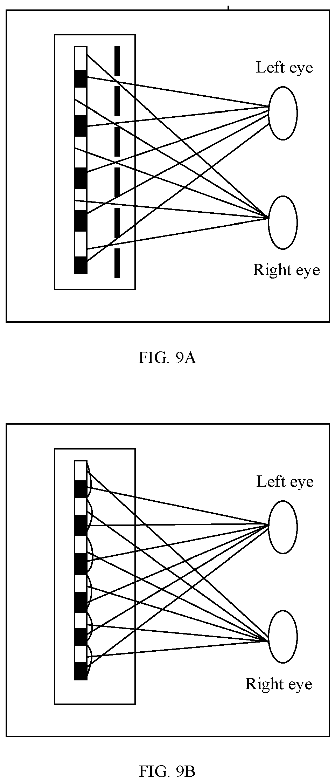

When there are multiple users at the same time, such as three users, a signal change may be detected in these three directions, thus marking the existence of the three users on the entire viewing plane. A display control module may form three groups of display sequences, which may be projected through the grating in turn, so that the user may view the best 3D visual image simultaneously through three windows ABC. As shown in FIG. 9A and FIG. 9B below, six groups of display grating sequences are designed, which may be switched quickly with a very small delay, so that the user may view the same picture at each angle.

If there is one user currently, and the position of the user changes, such as the distance from the user to the screen changes from D1 to D2, or the viewing angle changes, such as from a1 to a2, the display sequence may be switched to the matched angle a2, and the interval and width of the grating may be changed to match the current viewing distance D2.

For a single user, if the user's head moves or swings left and right, the viewing angle may change, and an original fixed grating angle may no longer provide the best viewing experience, so it needs to be adjusted at this time. A detection device scans an angle range from the left side to right side of the head through a boundary scanning method. When the angle changes during an intermittent scanning, it is determined that the current user has turned or shifted his/her head, and it is necessary to initiate the corresponding display adjustment and a display module is adjusted to match the corresponding grating angle.

The parallax between two eyes needs to be considered for realization of 3D stereoscopic image. If the parallax is not correct, a 3D vision may not be obtained. The grating interval determines the distance between pixels of the left and right eye, and a general density is about half of the height of a screen pixel, so that a column of grating corresponds to a column of left eye and a column of right eye. Specifically, when a certain user is locked by a device, the interval of its corresponding grating is adjusted according to the positions of the head and eyes and the pupil distance of the users, so that each user may have an interval parameter matched thereto. Through this adaptive matching function, the parallax between the mobile phone and the user may be adjusted to achieve the best naked-eye 3D viewing effect.

At the same time, the display parameter may be adjusted according to a size of the screen of the mobile phone and the amount of image/video resources, and mode of viewing in horizontal/vertical screen. As for the size of the screen, the naked-eye 3D image should match the size of the screen; otherwise, pixels may be lost due to an automatic scaling, which leads to inconsistence between pixels of the left and right eyes, and thereby the 3D effect may not be provided. Herein, the display system may first detect the size of the screen, whether it is performed in the mode of viewing in horizontal or vertical screen, the amount of the picture/image resources and other parameters to adjust the display parameter, such as the best viewing angle, the grating interval, a horizontal/vertical arrangement form of the grating, etc.

A slit or cylinder lens grating is added between the LCD and a backlight module to realize light splitting. A grid interval, a tilt angle, a refresh rate, a timing sequence and the mode for horizontal and vertical arrangement are dynamically adjusted by a variable driver. By detecting a rotation mode of the mobile phone (such as the horizontal screen mode or the vertical screen mode), the grating will be adjusted to be in horizontal arrangement or vertical arrangement.

In addition to the above-described adjustable cylinder lens grating, an adjustable cylinder lens may also be used to add a layer of cylinder lenses in front of the display screen, so that a pixel of the image below each cylinder lens is divided into several sub-pixels, and the lens may project each sub-pixel from different directions. Both eyes view the display screen from different angles to obtain the 3D image.

At the same time, the switching of 3D display may be realized by means of an adjustable directional backlight. By using two LEDs together with a quick-response LCD panel and a driving method, the directional backlight makes a 3D content enter a viewer's left and right eyes in a sorting manner to interchange the images and generate the parallax, which then makes people feel the 3D effect.

In the embodiment of the present disclosure, the number of the gratings is set to be in a range of 1 to 6. In the grating display adjustment, it is necessary to balance the number of people and the 3D display effect. Since the larger the number of user is, the more groups of gratings are required, and the more gratings is, the greater the delay between two of the groups is. Here, the delay may only be reduced by increasing the refresh frequency. In order to obtain accurate detection for angle of the user and a good viewing effect, it is suggested that the number of the gratings should not be set to be too large. For example, taking 30 degrees as an example, the maximum number of the gratings may be 6, which may meet most of requirements in multi-user scenario.

The embodiment of the present disclosure further includes: setting alert information for a preferred viewing position. In a conventional stereoscopic viewing mode, the user has to obtain the distance, the position and the angle by himself, and the user often has to perform adjustment for a period of time before obtaining the best visual area. In a viewing alert mode, the angle and distance values detected above are fed back to the user, which will be displayed on the video resources in form of digital or graphic guide interface. The angle and distance values are compared with standard angle and distance values to alert the user whether to approach or move away from the screen, and how to align to the best viewing angle range. Of course, the user may enable the alert function by pressing a button. When the number and interval of the gratings are determined, the standard angle and distance values (i.e., the best value for obtaining the 3D viewing effect) for each angle are set.

A best viewing position is determined based on the number of the gratings and intervals of the gratings in the terminal display system. When multiple users are included, a best position is set for each of the users separately. An actual position of the user is obtained, and an alert message for moving to the best position is displayed when the actual position of the user deviates from the best position as set. The alert message includes movement information alerting the user to approach or move away from the terminal and a viewing angle.

The following is described with reference to specific implementation scenarios.

### Embodiment 1

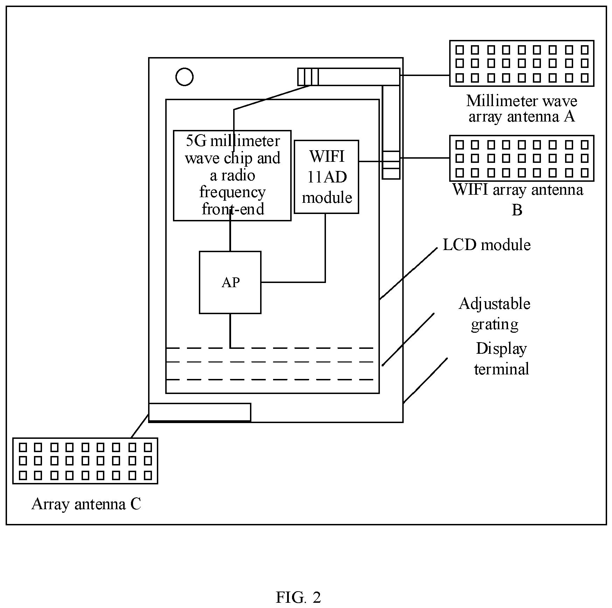

FIG. 2 is a schematic structural diagram illustrating an apparatus according to an embodiment of the present disclosure.

### Illustrative example

FIG. 3 is a diagram illustrating a single-user detection according to an illustrative example.

FIG. 3 is a schematic diagram illustrating single-user detection. When a user moves from a position A to a position B, an array scanning antenna switches from an angle 4 to an angle 6, and if a millimeter wave detection circuit detects a reflected signal, it is detected that there is a user in the direction.

### Embodiment 2

FIG. 4 is a diagram illustrating a multi-user tracking and detection according to an embodiment of the present disclosure.

When there are three target users in front of a terminal device, a specific continuous millimeter wave signal is transmitted by a millimeter wave transmitting apparatus placed on the mobile phone to detect whether there is a user within the current 180-degree horizontal range of the mobile phone. Through an angle scanning method, the scanning is performed once every 12 degrees and will be performed 15 times in turn. As shown in FIG. 4, when a user is detected at a certain angle, a drive for adjusting the grating display in the direction may be triggered. For example, there are currently 3 users respectively located within area ranges in three angle directions A, B and C, three groups of display sequences may be formed at last, which may be projected through the grating in turn, and then the user may view the best 3D visual image through the three windows A, B, C simultaneously.

### Embodiment 3

FIG. 5 is a diagram illustrating detection performed through millimeter wave transmitting and receiving antennas. Directions and angles of antenna lobes are scanned quickly by a microstrip antenna array placed at an edge of the terminal. Here, a fast frequency scanning method is mainly used.

### Embodiment 4

FIG. 6 is a diagram illustrating detection of human body attenuation according to an embodiment of the present disclosure.

When there is a user in a certain angle direction of a display terminal, a system loss of the millimeter wave signal in the corresponding direction may suddenly increase due to a signal blocking, a multi-path attenuation and other factors, which is basically above 10DB. By detecting a change in signal strength in the direction, it may be determined whether there is a user in the corresponding direction.

### Embodiment 5

FIG. 7 is a diagram illustrating a distance and pupil distance detection according to an embodiment of the present disclosure. Since the users are different in size, weight and contour, the detected echo signal information of the millimeter wave may be different. Each newly identified user is stored and marked by performing marking again. FIG. 7 shows a detection of a user A and a user B. For each user, a time difference value for a round trip of a wave is calculated though an echo signal of the millimeter wave, which may then be converted into a corresponding relative distance value by multiplying a wave speed.

Through detecting the human body by the millimeter wave, a distance *d* between the user and the screen is calculated first. Then a scanning for head contour is implemented through an array antenna to obtain a corresponding angle *a* between the two sides of the head, and then a width *w* of the head may be calculated. Next, the user's head image is captured through the front camera, and the distances between the two eyes, i.e., the specific pupil distance of the user, is calculated through the image proportional relationship between the head and the two eyes as well as the obtained width w of the head. Finally, according to the vertical distance *d* between the user and the screen and the pupil distance *s*, a corresponding best viewing angle *b* may be calculated, thus realizing tracking for the distance between the target user and the screen andtracking for a pupil distance and angle of the target user.

### Embodiment 6

FIG. is a diagrams illustrating a cooperative detection and an adjustment control according to an embodiment of the present disclosure.

Through a 5G communication or WIFI 11AD millimeter wave module placed on a mobile phone, a millimeter wave echo signal detection, a signal attenuation detection, and a millimeter wave imaging detection for a current viewing user of a terminal are implemented, and detection and tracking of the viewing number, angle, viewing distance and pupil distance of the user are implemented. Meanwhile, combining the above with the video content and the mode of screen, an adaptive adjustment of the 3D grating is implemented.

### Embodiment 7

The following is described with reference to an example for grating adjustment.

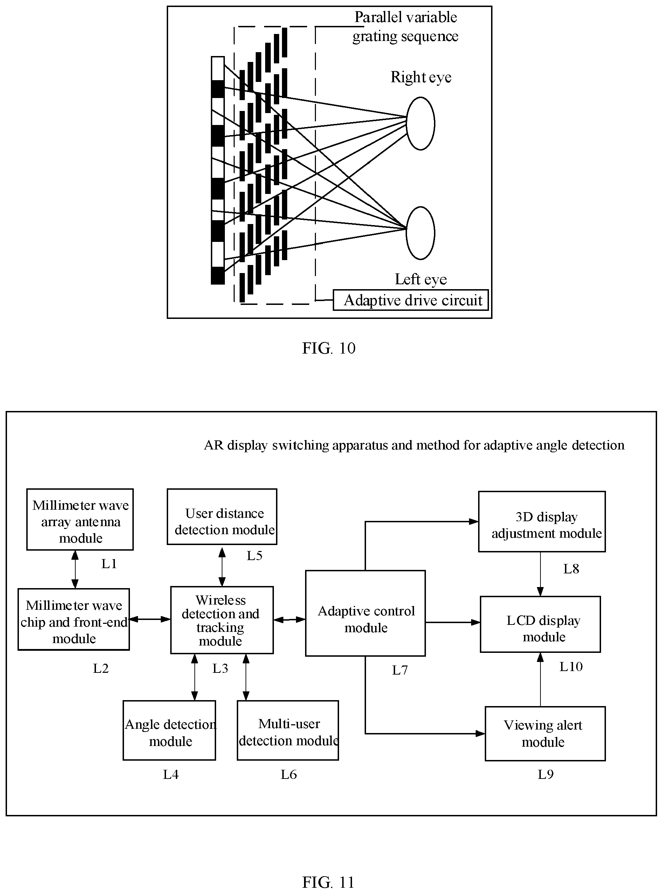

As shown in FIGs. 9A, 9B and 10, a slit or a cylinder lens grating is added between the LCD and a backlight module to realize light splitting. A grid interval, a tilt angle, a refresh rate, a timing sequence and the mode for horizontal and vertical arrangement are dynamically adjusted by a variable driver. By detecting a rotation mode of the mobile phone (such as the horizontal screen mode or the vertical screen mode), the grating will be adjusted to be in horizontal arrangement or vertical arrangement.

In the following example, when it is detected that there are 6 users viewing the screen at the same time, a control system uses 6 groups of variable grating sequences, which are rotated in turn. The left and right eyes of each of the users may see respective pixels of images of the left and right eyes alternately displayed on the LCD through a corresponding sequence gap. Pixelsfor the left eye are projected to the left eye through a gap A, and an image of the right eye is projected to the right eye through a gap B, thus providing the stereoscopic 3D visual effect due to a left and right parallax.

If the number of users decreases or the position or angle changes, the detection sequence may randomly adjust a driving algorithm and re-match to obtain a new combination of grating sequence and display parameter.

### Embodiment 8

An embodiment of the present disclosure provides an AR display switching apparatus, and FIG. 11 is system structural block diagram illustrating the AR display switching apparatus for an angle detection.

### Embodiment 9

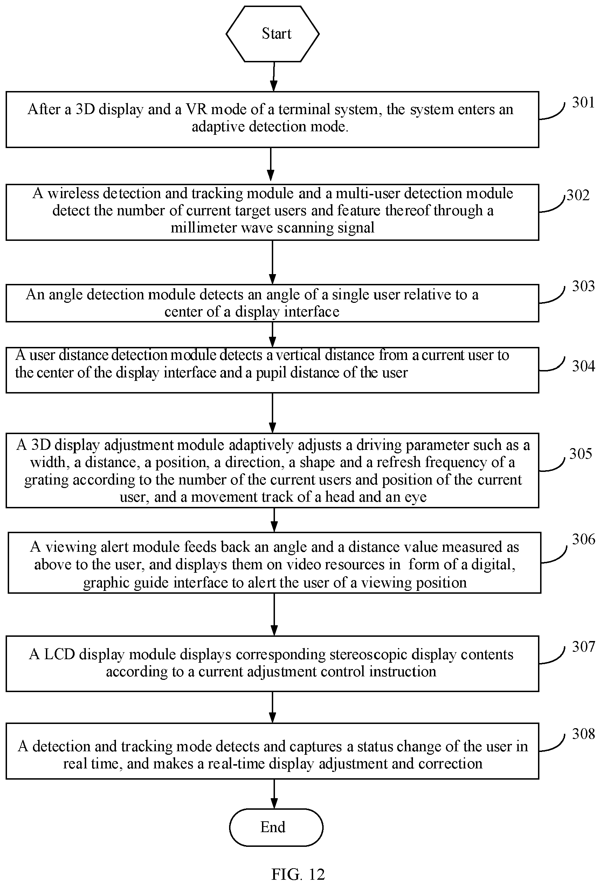

An embodiment of the present disclosure provides an AR display switching method. As shown in FIG. 12, the method provided by the present disclosure includes the following steps.

At step 301, after a 3D display and VR mode, a terminal system enters an adaptive detection mode.

At step 302, a wireless detection and tracking module and a multi-user detection module detect the number of current target users and features thereof through a millimeter wave scanning signal.

At step 303, an angle detection module detects an angle of a single user with respect to a center of a display interface.

At step 304, a user distance and pupil distance detection module detects a vertical distance from a current user to the center of the display interface and a pupil distance of the user.

At step 305, a 3D display adjustment module adaptively adjusts a driving parameter such as a width, a distance, a position, a direction, a shape and a refresh frequency of a grating, according to the number of the current users, the positions, and movement tracks of heads and eyes of the current users.

At step 306, a viewing alert module feeds back the angle and the distance value detected above to the user, and displays them on video resources in the form of a digital, graphic guide interface to alert the user of a viewing position.

In step 307, a LCD display module displays corresponding stereoscopic display contents according to a current adjustment control instruction.

In step 308, a detection and tracking mode detects and captures a status change of the user in real time, and makes a real-time display adjustment and correction.

Based on the same or similar concepts as those in the forgoing embodiments, an embodiment of the present disclosure further provides a 3D terminal image display apparatus arranged on a terminal. The 3D terminal image display apparatus provided by the present disclosure includes: a signal unit configured to obtain a millimeter wave measurement signal; a feature parameter obtaining unit configured to identify a user and determine a feature parameter of the user according to the millimeter wave measurement signal and a reference signal; and an image switching unit configured to switch a display parameter of a 3D image according to the feature parameter of the user.

In the embodiment of the present disclosure, the feature parameter includes at least one of the following: the number of users, an orientation of the user, a user distance, and a pupil distance of the user.

In the embodiment of the present disclosure, the signal unit is further configured to transmit the reference signal before obtaining the millimeter wave measurement signal. The reference signal is a signal obtained after the transmitted reference signal being reflected by the user to a terminal.

In the embodiment of the present disclosure, the signal unit is further configured to receive a reference signal sent by a second device. The millimeter wave measurement signal is a signal obtained after transmitting the reference signal to a terminal through the user.

In the embodiment of the present disclosure, the signal unit transmits the reference signal in multiple directions.

In the embodiment of the present disclosure, when a signal to be received by the terminal is the millimeter wave measurement signal or the reference signal, the signal unit receives the millimeter wave measurement signal or the reference signal in the multiple directions.

In the embodiment of the present disclosure, the transmitting or receiving of the signal in the multiple directions by the signal unit is implemented by at least one of the following ways:
dividing a 180-degree front detection plane into multiple independent visual areas, covering each of the independent visual areas by different antenna groups, and performing the transmission or the reception of signals in each of the independent visual areas through an antenna for the independent visual area, wherein the signals comprises the reference signal and the millimeter wave measurement signal; or dividing the 180-degree front detection plane into multiple independent visual areas, scanning each of the independent visual areas in turn through antenna groups, and performing the transmission or the reception of signals in each of independent visual areas when scanning the independent visual area; wherein the signals comprises the reference signal and the millimeter wave measurement signal.

Herein, one antenna group includes one or more groups of antennas.

In the embodiment of the present disclosure, the feature parameter obtaining unit determines the feature parameter of the user, including: determining the user distance corresponding to the user; where determining the user distance corresponding to the user comprises: calculating time difference values for multiple round trip waves of the millimeter wave measurement signal, converting the time difference values into a corresponding total distance value by multiplying the time difference values with a wave speed, dividing the total distance value by the number of times for multiple round trips to calculate a vertical distance from the user to a display screen, and taking the vertical distance as the user distance.

The image switching unit switches the display parameter of the 3D image according to the feature parameter of the user, including: when the user distance changes, switching the display parameter of the 3D image to adapt to a changed user distance.

In the embodiment of the present disclosure, the feature parameter obtaining unit determines the feature parameter of the user, including: determining a pupil distance corresponding to the user. wherein determining the pupil distance corresponding to the user comprises: implementing a head contour scanning by an array antenna to obtain a corresponding head distance angle; calculating a width w of the head according to the corresponding head distance angle; and acquiring a head image of the user through a front camera, calculating a distance s between two eyes according to an image proportional relationship between a head and the two eyes, and the width w of the head, wherein the distance s is the pupil distance corresponding to the user.

The image switching unit switches the display parameter of the 3D image according to the feature parameter of the user, including: when the pupil distance of the user changes, the display parameter of the 3D image is switched to adapt to the changed pupil distance of the user.

In the embodiment of the present disclosure, the feature parameter obtaining unit identifies the user and determines the feature parameter of the user, including: determining the number of the users; and when multiple users are included, determining the feature parameter for each of the users respectively.

The image switching unit switches the display parameter of the 3D image according to the feature parameter of the users, which includes: setting a display parameter of the 3D image applicable to each of the users respectively according to the feature parameter of each of the users, and switching and displaying the display parameter of the 3D image applicable to each of the users in turn.

In the embodiment of the present disclosure, the image switching unit switches the display parameter of the 3D image according to the feature parameter of the user in at least one of the following ways:
i. generating, according to the number of the users, the same number of display sequences correspondingly, and projecting the display sequences through a grating in turn;
ii. when a viewing angle of a user changes, transforming a display sequence corresponding to the user to an updated angle;
iii. when a viewing distance of a user changes, changing an interval and width of the grating to match a changed viewing distance;
iv. scanning an angle range between a left side and a right side of a human head by a boundary scanning method, determining that the current user turns or shifts his/her head when an angle changes during an intermittent scanning, and activating a display adjustment corresponding to the head turning or shifting; the user turning or shifting his/her head refers to changes in the viewing angle of the user; and
v. adjusting an interval of a grating corresponding to a user according to a position of the user's head and a pupil distance between two eyes, so that the user acquires a matching interval parameter.

In the embodiment of the present disclosure, the feature parameter obtaining unit identifies the user and determines the feature parameter of the user according to the millimeter wave measurement signal and the reference signal, including: obtaining a reflectivity of the user according to the millimeter wave measurement signal and the reference signal, identifying the user according to the reflection index, and obtaining the feature parameter of the user; wherein the millimeter wave measurement signal is a signal generated after the reference signal is reflected by the user.

In the embodiment of the present disclosure, the feature parameter obtaining unit identifies the user and determines the feature parameter of the user according to the millimeter wave measurement signal and the reference signal, including: obtaining a radiation power of the user according to the millimeter wave measurement signal and the reference signal, identifying the user according to a reflectivity, and obtaining the feature parameter of the user; wherein the millimeter wave measurement signal is a radiation signal generated after the user is irradiated by the reference signal.

Based on the same or similar concepts as the forgoing embodiments, an embodiment of the present disclosure further provides a terminal, which includes any 3D image display apparatus provided by the embodiments of the present disclosure.

Based on the same or similar concepts as the forgoing embodiments, an embodiment of the present disclosure further provides a terminal, including a memory, a processor, and a computer program stored on the memory and executable on the processor. The processor, when executing the computer program, implements the processing of any 3D image display method provided by the embodiments of the present disclosure.

Based on the same or similar concepts as the forgoing embodiments, an embodiment of the present disclosure further provides a computer-readable storage medium on which a computer program is stored. The computer program, when executed by a processor, implements the processing of any 3D image display method provided by the embodiment of the present disclosure is realized.

It should be noted that the above-described embodiments are merely intended to be understood by those skilled in the art and are not intended to limit the protection scope of the present disclosure. Without departing from the inventive concept of the present disclosure, any obvious substitutions and improvements made by those skilled in the art are within the protection scope of the present disclosure.

## Claims

1. A 3D image display method, comprising:
obtaining a millimeter wave measurement signal;
identifying a user and determining a feature parameter of the user according to the millimeter wave measurement signal and a reference signal using an array antenna; and
switching a display parameter of a 3D image according to the feature parameter of the user,
wherein, a plurality of users are included, and the feature parameter of each of the plurality of the users comprises an orientation of the user, a user distance and user's own feature parameters,
wherein, identifying the user and determining the feature parameter of the user according to the millimeter wave measurement signal and the reference signal comprises: determining, for each of the plurality of users respectively, the orientation of the user and the user distance according to the millimeter wave measurement signal and the reference signal and the user's own feature parameters;
wherein determining, for each of the plurality of users, the user's own feature parameters comprises: determining a pupil distance corresponding to the user, wherein the pupil distance is determined through a front camera together with a head contour scanning by the array antenna; and
wherein, switching the display parameter of the 3D image according to the feature parameter of the user comprises setting a display parameter of the 3D image applicable to each of the users respectively according to the feature parameter, and switching and displaying the display parameter of the 3D image applicable to each of the users in turn.

2. The 3D image display method according to claim 1, wherein before obtaining the millimeter wave measurement signal, the method further comprises:
transmitting the reference signal; wherein the reference signal is a millimeter wave signal; and
wherein, the millimeter wave measurement signal is a signal obtained after the transmitted reference signal being reflected by the user to a terminal.

3. The 3D image display method according to claim 1, further comprising:
receiving a reference signal sent by a second device;
wherein the millimeter wave measurement signal is a signal obtained after transmitting the reference signal to a terminal through the user.

4. The 3D image display method according to claim 2 or 3, wherein, the obtaining, the transmission or the reception of signals is performed in multiple directions.

5. The 3D image display method according to claim 4, wherein performing the obtaining, the transmission or the reception of signals in the multiple directions is implemented by at least one of the following ways:
dividing a 180-degree front detection plane into multiple independent visual areas, covering each of the independent visual areas by different antenna groups, and performing the obtaining, the transmission or the reception of signals in each of the independent visual areas through an antenna for the independent visual area, wherein the signals comprise the reference signal and the millimeter wave measurement signal; or
dividing the 180-degree front detection plane into multiple independent visual areas, scanning each of the independent visual areas in turn through antenna groups, and performing the obtaining, the transmission or the reception of signals in each of independent visual areas when scanning the independent visual area; wherein the signals comprise the reference signal and the millimeter wave measurement signal;
wherein the antenna groups comprise one or more groups of antennas.

6. The 3D image display method according to claim 1, wherein determining, for each of the plurality of users, the user distance comprises:
calculating time difference values for multiple round trip waves of the millimeter wave measurement signal, converting the time difference values into a corresponding total distance value by multiplying the time difference values with a wave speed, dividing the total distance value by the number of times for the round trip waves to calculate a vertical distance from the user to a display screen, and taking the vertical distance as the user distance; and
switching the display parameter of the 3D image according to the feature parameter of the user comprises: when the user distance changes, switching the display parameter of the 3D image to adapt to a changed user distance.

7. The 3D image display method according to claim 1, wherein
determining the pupil distance corresponding to the user comprises:
implement the head contour scanning by the array antenna to obtain a corresponding head distance angle;
calculating a width w of the head according to the corresponding head distance angle; and
acquiring a head image of the user through the front camera, calculating a distance s between two eyes according to an image proportional relationship between a head and the two eyes and the width w of the head, wherein the distance s is the pupil distance corresponding to the user;
switching the display parameter of the 3D image according to the feature parameter of the user comprises:
when the pupil distance of the user changes, the display parameter of the 3D image is switched to adapt to the changed pupil distance of the user.

8. The 3D image display method according to claim 1, further comprising:
determining a best viewing position according to the number of gratings and intervals of gratings in a terminal display system;
setting best positions of each of the plurality of users respectively; and
for each of the plurality of users, obtaining an actual position of the user, and displaying an alert message for moving to the best position when the actual position of the user deviates from the set best position; wherein the alert message comprises movement information alerting the user to approach or move away and a viewing angle.

9. The 3D image display method according to claim 1, wherein switching the display parameter of the 3D image according to the feature parameter of the user is performed in at least one of the following ways:
i. generating, according to the number of users, the same number of display sequences correspondingly, and projecting the display sequences through a grating in turn;
ii. when a viewing angle of a user changes, transforming a display sequence corresponding to the user to an updated angle;
iii. when a viewing distance of a user changes, changing an interval and width of the grating to match a changed viewing distance;
iv. scanning a range for an angle between a left side and a right side of a human head by a boundary scanning method, determining that the current user turns or shifts his/her head when the angle changes during an intermittent scanning, and activating a display adjustment corresponding to the head turning or shifting; and
v. adjusting an interval of a grating corresponding to the user according to a position of the user's head and a pupil distance between two eyes, so that the user acquires a matching interval parameter.

10. The 3D image display method according to claim 1, wherein switching the display parameter of the 3D image according to the feature parameter of the user is implemented by an adjustment of a grating;
the adjustment of the grating comprises at least one of the following: selecting a slit or cylinder lens grating arranged between a LCD and a backlight module to realize a light splitting, and dynamically adjusting through a variable driver one or more settings of a grid interval, a tilt angle, a refresh rate or a timing and a horizontal/vertical arrangement mode.

11. The 3D image display method according to claim 1, wherein identifying the user and determining the corresponding feature parameter of the user according to the millimeter wave measurement signal and the reference signal comprises:
obtaining a reflectivity of the user according to the millimeter wave measurement signal and the reference signal, identifying the user according to the reflection index, and obtaining the feature parameter of the user; wherein the millimeter wave measurement signal is a signal generated after the reference signal is reflected by the user; or
obtaining a radiation power of the user according to the millimeter wave measurement signal and the reference signal, identifying the user according to reflectivity, and obtaining the feature parameter of the user; wherein the millimeter wave measurement signal is a radiation signal generated after the user is irradiated by the reference signal.

12. A terminal, comprising a memory, a processor, and a computer program stored on the memory and executable on the processor, wherein the processor, when executing the computer program, implements processing of the method according to any one of claims 1 to 11.

13. A computer-readable storage medium on which a computer program is stored, wherein the computer program, when executed by a processor, implements the processing of the method according to any one of claims 1 to 11.

## Patentansprüche

1. 3D-Bilddarstellungsverfahren, umfassend:
Erhalt eines Millimeterwellen-Messsignals;
Identifizieren eines Benutzers und Bestimmung eines Merkmalsparameters des Benutzers gemäß dem Millimeterwellen-Messsignal und einem Referenzsignal unter Verwendung einer Array-Antenne; und
Umschalten eines Anzeigeparameters eines 3D-Bildes in Abhängigkeit vom Merkmalsparameter des Benutzers,
wobei eine Vielzahl von Benutzern enthalten ist und der Merkmalsparameter jedes der Vielzahl von Benutzern eine Orientierung des Benutzers, einen Benutzerabstand und benutzereigene Merkmalsparameter umfasst,
wobei das Identifizieren des Benutzers und das Bestimmen des Merkmalsparameters des Benutzers gemäß dem Millimeterwellen-Messsignal und dem Referenzsignal Folgendes umfasst: Bestimmen der Orientierung des Benutzers und des Abstandes des Benutzers gemäß dem Millimeterwellen-Messsignal und dem Referenzsignal sowie den benutzereigenen Merkmalsparametern für jeden der Vielzahl von Benutzern;
wobei das Bestimmen der benutzereigenen Merkmalsparameter für jeden der Vielzahl von Benutzern Folgendes umfasst: Bestimmen eines dem Benutzer entsprechenden Pupillenabstands, wobei der Pupillenabstand durch eine Frontkamera zusammen mit einer Kopfkonturabtastung durch die Array-Antenne bestimmt wird;
und
wobei das Umschalten des Anzeigeparameters des 3D-Bildes gemäß dem Merkmalsparameter des Benutzers das Einstellen eines Anzeigeparameters des 3D-Bildes umfasst, der für jeden der Benutzer jeweils gemäß dem Merkmalsparameter anwendbar ist, und das Umschalten und Anzeigen des Anzeigeparameters des 3D-Bildes, der für jeden der Benutzer anwendbar ist, der Reihe nach.

2. 3D-Bilddarstellungsverfahren nach Anspruch 1, wobei das Verfahren vor dem Erhalt des Millimeterwellen-Messsignals weiter Folgendes umfasst:
Übertragen des Referenzsignals; wobei das Referenzsignal ein Millimeterwellensignal ist; und
wobei das Millimeterwellen-Messsignal ein Signal ist, das erhalten wird, nachdem das übertragene Referenzsignal vom Benutzer an ein Endgerät reflektiert wurde.

3. 3D-Bilddarstellungsverfahren nach Anspruch 1, weiter umfassend:
Empfang eines von einer zweiten Vorrichtung gesendeten Referenzsignals;
wobei das Millimeterwellen-Messsignal ein Signal ist, das nach der Übertragung des Referenzsignals an ein Endgerät durch den Benutzer erhalten wird.

4. 3D-Bilddarstellungsverfahren nach Anspruch 2 oder 3, wobei das Erhalten, Senden oder Empfangen von Signalen in mehreren Richtungen durchgeführt wird.

5. 3D-Bilddarstellungsverfahren nach Anspruch 4, wobei die Durchführung des Erhaltens, des Sendens oder des Empfangens von Signalen in den verschiedenen Richtungen auf mindestens eine der folgenden Arten erfolgt:
Unterteilen einer 180-Grad-Front-Erfassungsebene in mehrere unabhängige Sichtbereiche, Abdecken jedes der unabhängigen Sichtbereiche durch verschiedene Antennengruppen und Durchführen des Erhaltens, des Sendens oder des Empfangens von Signalen in jedem der unabhängigen Sichtbereiche durch eine Antenne für den unabhängigen Sichtbereich, wobei die Signale das Referenzsignal und das Millimeterwellen-Messsignal umfassen; oder
Unterteilen der 180-Grad-Front-Erfassungsebene in mehrere unabhängige Sichtbereiche, Abtasten jedes der unabhängigen Sichtbereiche der Reihe nach durch Antennengruppen, und Durchführen des Erhaltens, des Sendens oder des Empfangens von Signalen in jedem der unabhängigen Sichtbereiche beim Abtasten des unabhängigen Sichtbereichs; wobei die Signale das Referenzsignal und das Millimeterwellen-Messsignal umfassen;
wobei die Antennengruppen eine oder mehrere Gruppen von Antennen umfassen.

6. 3D-Bilddarstellungsverfahren nach Anspruch 1, wobei die Bestimmung des Abstandes des Benutzers für jeden der Vielzahl von Benutzern Folgendes umfasst:
Berechnen von Zeitdifferenzwerten für mehrere Umlaufwellen des Millimeterwellen-Messsignals, Konvertieren der Zeitdifferenzwerte in einen entsprechenden Gesamtentfernungswert durch Multiplizieren der Zeitdifferenzwerte mit einer Wellengeschwindigkeit, Dividieren des Gesamtabstandswertes durch die Anzahl von Malen für die Umlaufwellen, um einen vertikalen Abstand von dem Benutzer zu einem Anzeigebildschirm zu berechnen, und Verwenden des vertikalen Abstandes als den Benutzerabstand; und
Umschalten des Anzeigeparameters des 3D-Bildes entsprechend dem Merkmalsparameter des Benutzers umfasst: wenn sich der Benutzerabstand ändert, Umschalten des Anzeigeparameters des 3D-Bildes zur Anpassung an einen veränderten Benutzerabstand.

7. 3D-Bilddarstellungsverfahren nach Anspruch 1, wobei
die Bestimmung des dem Benutzer entsprechenden Pupillenabstands Folgendes umfasst:
Implementierung der Kopfkonturabtastung durch die Array-Antenne, um einen entsprechenden Kopfabstandswinkel zu erhalten;
Berechnen einer Breite w des Kopfes gemäß dem entsprechenden Kopfabstandswinkel; und
Erfassen eines Kopfbildes des Benutzers durch die Frontkamera, Berechnen eines Abstandes s zwischen zwei Augen gemäß einer bildproportionalen Beziehung zwischen einem Kopf und den beiden Augen und der Breite w des Kopfes, wobei der Abstand s der dem Benutzer entsprechende Pupillenabstand ist;
Umschalten der Anzeigeparameter des 3D-Bildes in Abhängigkeit von den Merkmalsparametern des Benutzers Folgendes umfasst:
wenn sich der Pupillenabstand des Benutzers ändert, wird der Anzeigeparameter des 3D-Bildes umgeschaltet, um sich an den geänderten Pupillenabstand des Benutzers anzupassen.

8. 3D-Bilddarstellungsverfahren nach Anspruch 1, weiter umfassend:
Bestimmung der besten Betrachtungsposition in Abhängigkeit von der Anzahl der Gitter und der Gitterabstände in einem Endgerät-Anzeigesystem;
Einstellung der besten Positionen für jeden der Vielzahl von Benutzern; und
für jeden der Vielzahl von Benutzern, Erhalten einer tatsächlichen Position des Benutzers und Anzeigen einer Warnmeldung zum Bewegen zur besten Position, wenn die tatsächliche Position des Benutzers von der eingestellten besten Position abweicht; wobei die Warnmeldung Bewegungsinformationen, die den Benutzer warnen, sich zu nähern oder zu entfernen, und einen Betrachtungswinkel umfasst.

9. Verfahren zur Anzeige eines 3D-Bildes nach Anspruch 1, wobei das Umschalten der Anzeigeparameter des 3D-Bildes in Abhängigkeit von den Merkmalsparametern des Benutzers auf mindestens eine der folgenden Arten erfolgt:
i. Erzeugen, entsprechend der Anzahl der Benutzer, der gleichen Anzahl von Anzeigesequenzen, und Projizieren der Anzeigesequenzen durch ein Gitter nacheinander;
ii. wenn sich der Betrachtungswinkel eines Benutzers ändert, Umwandlung einer dem Benutzer entsprechenden Anzeigesequenz in einen aktualisierten Winkel;
iii. wenn sich der Betrachtungsabstand eines Benutzers ändert, Änderung des Intervalls und der Breite des Gitters entsprechend dem geänderten Betrachtungsabstand;
iv. Abtasten eines Bereichs für einen Winkel zwischen einer linken Seite und einer rechten Seite eines menschlichen Kopfes durch ein Grenzabtastverfahren, Bestimmen, dass der aktuelle Benutzer seinen Kopf dreht oder verschiebt, wenn sich der Winkel während einer intermittierenden Abtastung ändert, und Aktivieren einer Anzeigeeinstellung entsprechend der Kopfdrehung oder -verschiebung; und
v. Einstellen eines Intervalls eines Gitters, das dem Benutzer entspricht, gemäß einer Position des Kopfes des Benutzers und eines Pupillenabstands zwischen zwei Augen, so dass der Benutzer einen passenden Intervallparameter erhält.

10. Verfahren zur Darstellung von 3D-Bildern nach Anspruch 1, wobei das Umschalten der Anzeigeparameter des 3D-Bildes in Abhängigkeit von den Merkmalsparametern des Benutzers durch eine Einstellung eines Gitters erfolgt;
die Einstellung des Gitters mindestens eines der Folgenden umfasst: Auswählen eines Spalt- oder Zylinderlinsengitters, das zwischen einem LCD und einem Hintergrundbeleuchtungsmodul angeordnet ist, um eine Lichtaufteilung zu realisieren, und dynamisches Einstellen einer oder mehrerer Einstellungen eines Gitterintervalls, eines Neigungswinkels, einer Aktualisierungsrate oder eines Timings und eines horizontalen/vertikalen Anordnungsmodus durch einen variablen Treiber.

11. 3D-Bilddarstellungsverfahren nach Anspruch 1, wobei die Identifizierung des Benutzers und die Bestimmung des entsprechenden Merkmalsparameters des Benutzers gemäß dem Millimeterwellen-Messsignal und dem Referenzsignal Folgendes umfasst:
Erhalten eines Reflexionsvermögens des Benutzers gemäß dem Millimeterwellen-Messsignal und dem Referenzsignal, Identifizieren des Benutzers gemäß dem Reflexionsindex und Erhalten des Merkmalsparameters des Benutzers; wobei das Millimeterwellen-Messsignal ein Signal ist, das erzeugt wird, nachdem das Referenzsignal von dem Benutzer reflektiert wurde; oder
Erhalten einer Strahlungsleistung des Benutzers gemäß dem Millimeterwellen-Messsignal und dem Referenzsignal, Identifizieren des Benutzers gemäß dem Reflexionsvermögen und Erhalten des Merkmalsparameters des Benutzers; wobei das Millimeterwellen-Messsignal ein Strahlungssignal ist, das erzeugt wird, nachdem der Benutzer durch das Referenzsignal bestrahlt wurde.

12. Endgerät, umfassend einen Speicher, einen Prozessor und ein Computerprogramm, das in dem Speicher gespeichert und auf dem Prozessor ausführbar ist, wobei der Prozessor bei der Ausführung des Computerprogramms die Verarbeitung des Verfahrens nach einem der Ansprüche 1 bis 11 implementiert.

13. Computerlesbares Speichermedium, auf dem ein Computerprogramm gespeichert ist, wobei das Computerprogramm, wenn es von einem Prozessor ausgeführt wird, die Verarbeitung des Verfahrens nach einem der Ansprüche 1 bis 11 implementiert.

## Revendications

1. Procédé d'affichage d'image 3D, comprenant les étapes consistant à :
obtenir un signal de mesure d'ondes millimétriques ;
identifier un utilisateur et déterminer un paramètre caractéristique de l'utilisateur en fonction du signal de mesure d'ondes millimétriques et d'un signal de référence à l'aide d'une antenne réseau ; et
commuter un paramètre d'affichage d'une image 3D en fonction du paramètre caractéristique de l'utilisateur,
dans lequel, une pluralité d'utilisateurs sont inclus, et le paramètre caractéristique de chacun de la pluralité des utilisateurs comprend une orientation de l'utilisateur, une distance jusqu'à l'utilisateur et des paramètres caractéristiques propres à l'utilisateur,
dans lequel, l'identification de l'utilisateur et la détermination du paramètre caractéristique de l'utilisateur en fonction du signal de mesure d'ondes millimétriques et du signal de référence comprennent : la détermination, pour chacun de la pluralité d'utilisateurs respectivement, de l'orientation de l'utilisateur et la distance jusqu'à l'utilisateur en fonction du signal de mesure d'ondes millimétriques et du signal de référence et des paramètres caractéristiques propres à l'utilisateur ;
dans lequel la détermination, pour chacun de la pluralité d'utilisateurs, des paramètres caractéristiques propres à l'utilisateur comprend : la détermination d'une distance de pupille correspondant à l'utilisateur, dans lequel la distance de pupille est déterminée par une caméra frontale conjointement avec un balayage de contour de tête par l'antenne réseau ;
et
dans lequel, la commutation du paramètre d'affichage de l'image 3D en fonction du paramètre caractéristique de l'utilisateur comprend l'établissement d'un paramètre d'affichage de l'image 3D applicable à chacun des utilisateurs respectivement en fonction du paramètre caractéristique, et la commutation et l'affichage du paramètre d'affichage de l'image 3D applicable à tour de rôle à chacun des utilisateurs.

2. Procédé d'affichage d'image 3D selon la revendication 1, dans lequel, avant d'obtenir le signal de mesure d'ondes millimétriques, le procédé comprend en outre :
la transmission du signal de référence ; dans lequel le signal de référence est un signal d'ondes millimétriques ; et
dans lequel le signal de mesure d'ondes millimétriques est un signal obtenu après que le signal de référence transmis a été réfléchi par l'utilisateur vers un terminal.

3. Procédé d'affichage d'image 3D selon la revendication 1, comprenant en outre :
la réception d'un signal de référence envoyé par un second dispositif ;
dans lequel le signal de mesure d'ondes millimétriques est un signal obtenu après transmission du signal de référence à un terminal par l'intermédiaire de l'utilisateur.

4. Procédé d'affichage d'image 3D selon la revendication 2 ou 3, dans lequel, l'obtention, la transmission ou la réception de signaux est effectuée dans de multiples directions.

5. Procédé d'affichage d'image 3D selon la revendication 4, dans lequel la réalisation de l'obtention, de la transmission ou de la réception de signaux dans les directions multiples est mise en oeuvre par au moins l'une des manières suivantes :
diviser un plan de détection frontale à 180 degrés en de multiples zones visuelles indépendantes, couvrir chacune des zones visuelles indépendantes par différents groupes d'antennes, et effectuer l'obtention, la transmission ou la réception de signaux dans chacune des zones visuelles indépendantes par l'intermédiaire d'une antenne pour la zone visuelle indépendante, dans lequel les signaux comprennent le signal de référence et le signal de mesure d'ondes millimétriques ; ou
diviser le plan de détection frontale à 180 degrés en de multiples zones visuelles indépendantes, balayer chacune des zones visuelles indépendantes à tour de rôle par l'intermédiaire de groupes d'antennes, et effectuer l'obtention, la transmission ou la réception de signaux dans chacune de zones visuelles indépendantes lors du balayage de la zone visuelle indépendante ; dans lequel les signaux comprennent le signal de référence et le signal de mesure d'ondes millimétriques ;
dans lequel les groupes d'antennes comprennent un ou plusieurs groupes d'antennes.

6. Procédé d'affichage d'image 3D selon la revendication 1, dans lequel la détermination, pour chacun de la pluralité d'utilisateurs, de la distance jusqu'à l'utilisateur comprend :
le calcul de valeurs de différence de temps pour de multiples ondes aller-retour du signal de mesure d'ondes millimétriques, la conversion des valeurs de différence de temps en une valeur de distance totale correspondante en multipliant les valeurs de différence de temps par une vitesse d'onde, en divisant la valeur de distance totale par le nombre de fois pour les ondes aller-retour pour calculer une distance verticale entre l'utilisateur et un écran d'affichage, et en prenant la distance verticale comme la distance jusqu'à l'utilisateur ; et
la commutation du paramètre d'affichage de l'image 3D en fonction du paramètre caractéristique de l'utilisateur comprend : lorsque la distance jusqu'à l'utilisateur change, la commutation du paramètre d'affichage de l'image 3D pour s'adapter à une distance jusqu'à l'utilisateur changée.

7. Procédé d'affichage d'image 3D selon la revendication 1, dans lequel
la détermination de la distance de pupille correspondant à l'utilisateur comprend les étapes consistant à :
mettre en oeuvre le balayage de contour de tête par l'antenne réseau pour obtenir un angle de distance de tête correspondant ;
calculer une largeur w de la tête en fonction de l'angle de distance de tête correspondant ; et
acquérir une image de tête de l'utilisateur par l'intermédiaire de la caméra frontale, calculer une distance s entre deux yeux selon une relation proportionnelle d'image entre une tête et les deux yeux et la largeur w de la tête, dans lequel la distance s est la distance de pupille correspondant à l'utilisateur ;
la commutation du paramètre d'affichage de l'image 3D en fonction du paramètre caractéristique de l'utilisateur comprend :
lorsque la distance de pupille de l'utilisateur change, le paramètre d'affichage de l'image 3D est commuté pour s'adapter à la distance de pupille changée de l'utilisateur.

8. Procédé d'affichage d'image 3D selon la revendication 1, comprenant en outre les étapes consistant à :
déterminer une meilleure position d'observation en fonction du nombre de réseaux et des intervalles de réseaux dans un système d'affichage terminal ;
établir les meilleures positions de chacun de la pluralité d'utilisateurs respectivement ; et
pour chacun de la pluralité d'utilisateurs, obtenir une position réelle de l'utilisateur, et afficher un message d'alerte pour se déplacer à la meilleure position lorsque la position réelle de l'utilisateur s'écarte de la meilleure position établie ; dans lequel le message d'alerte comprend des informations de déplacement avertissant l'utilisateur de s'approcher ou de s'éloigner et un angle d'observation.

9. Procédé d'affichage d'image 3D selon la revendication 1, dans lequel la commutation du paramètre d'affichage de l'image 3D en fonction du paramètre caractéristique de l'utilisateur est effectuée d'au moins une des manières suivantes :
i. générer, en fonction du nombre d'utilisateurs, le même nombre de séquences d'affichage de manière correspondante, et projeter les séquences d'affichage par l'intermédiaire d'un réseau à tour de rôle ;
ii. lorsqu'un angle d'observation d'un utilisateur change, transformer une séquence d'affichage correspondant à l'utilisateur en un angle mis à jour ;
iii. lorsqu'une distance d'observation d'un utilisateur change, changer un intervalle et une largeur du réseau pour correspondre à une distance d'observation changée ;
iv. balayer une plage pour un angle entre un côté gauche et un côté droit d'une tête humaine par un procédé de balayage de limites, déterminer que l'utilisateur actuel tourne ou déplace sa tête lorsque l'angle change au cours d'un balayage intermittent, et activer un ajustement d'affichage correspondant à la rotation ou au déplacement de tête ; et
v. ajuster un intervalle d'un réseau correspondant à l'utilisateur en fonction d'une position de la tête d'utilisateur et d'une distance de pupille entre deux yeux, de sorte que l'utilisateur acquière un paramètre d'intervalle correspondant.

10. Procédé d'affichage d'image 3D selon la revendication 1, dans lequel la commutation du paramètre d'affichage de l'image 3D en fonction du paramètre caractéristique de l'utilisateur est mise en oeuvre par un ajustement d'un réseau ;
l'ajustement du réseau comprend au moins l'une des opérations suivantes : sélection d'un réseau de lentilles fendues ou cylindriques disposé entre un écran LCD et un module de rétroéclairage pour réaliser une division de lumière, et ajustement dynamique via un pilote variable d'un ou plusieurs réglages d'un intervalle de grille, d'un angle d'inclinaison, d'une fréquence de rafraîchissement ou d'un cadencement et d'un mode d'agencement horizontal/vertical.

11. Procédé d'affichage d'image 3D selon la revendication 1, dans lequel l'identification de l'utilisateur et la détermination du paramètre caractéristique correspondant de l'utilisateur en fonction du signal de mesure d'ondes millimétriques et du signal de référence comprennent :
l'obtention d'une réflectivité de l'utilisateur en fonction du signal de mesure d'ondes millimétriques et du signal de référence, l'identification de l'utilisateur en fonction de l'indice de réflexion, et l'obtention du paramètre caractéristique de l'utilisateur ; dans lequel le signal de mesure d'ondes millimétriques est un signal généré après que le signal de référence est réfléchi par l'utilisateur ; ou
l'obtention d'une puissance de rayonnement de l'utilisateur en fonction du signal de mesure d'ondes millimétriques et du signal de référence, l'identification de l'utilisateur en fonction de la réflectivité, et l'obtention du paramètre caractéristique de l'utilisateur ; dans lequel le signal de mesure d'ondes millimétriques est un signal de rayonnement généré après irradiation de l'utilisateur par le signal de référence.

12. Terminal, comprenant une mémoire, un processeur, et un programme d'ordinateur stocké sur la mémoire et exécutable sur le processeur, dans lequel le processeur, lors de l'exécution du programme d'ordinateur, met en oeuvre le traitement du procédé selon l'une quelconque des revendications 1 à 11.

13. Support de stockage lisible par ordinateur sur lequel un programme d'ordinateur est stocké, dans lequel le programme d'ordinateur, lorsqu'il est exécuté par un processeur, met en oeuvre le traitement du procédé selon l'une quelconque des revendications 1 à 11.
